# EUROPEAN PATENT APPLICATION

(11) **EP 3 207 796 A1**
(43) Date of publication of application: **23.08.2017**
(21) Application number: 17075003.8
(22) Date of filing: 13.02.2017
(51) Int. Cl.: A01K 97/04, B23B 47/28

(54) **DEVICE AND METHOD FOR ARRANGING A DRILLED HOLE IN A BOILIE**

(30) Priority: 18.02.2016 NL 1041728
(71) Applicant: Baljon, Antoon Willem, 3262 XJ Oud-Beijerland (NL)
(72) Inventor: Baljon, Antoon Willem, 3262 XJ Oud-Beijerland (NL)

(57) **Abstract**

The present invention relates to angling, and more particularly to fishing wherein use is made of boilies (2) as bait. The invention provides a device and a method for arranging a drilled hole (9) in a boilie (2) using a known hand drill (3). The device comprises first and second co-acting substantially block-like parts, wherein the first part comprises a substantially flat upper side(7) with at least one first recess (8) therein for partially closing round the boilie (2) and wherein the bottom of the first recess (8) is provided with a hole (9) extending to the underside (10) of the first part. The second part comprises a substantially flat underside (11) with at least one second recess (12) therein for closing round the part of the boilie (2) not closed around by the recess (8) in the first part, wherein the bottom of the second part is provided with a borehole (13) which extends to the upper side of the second part and which provides access and guiding for the hand drill (3). Tests have shown that the chance of breaking apart during drilling of a hole (9) in the boilie (2) is hereby limited to a minimum. The same advantage applies when a rod-like material is arranged in the hole (9) drilled in the boilie (2) in order to impart buoyancy to the boilie (2). The method comprises a number of steps for providing a boilie (2) with a drilled hole (9) and providing the drilled hole (9) with a rod-like material using the device.

## Description

### Field of the invention

The present invention relates to angling, and more particularly to fishing for groundfish such as carp, wherein use is made of a boilie or the like, such as a pellet, as bait. The invention provides a device and a method for arranging a drilled hole in a boilie using a known hand drill and inserting a cork stick without cracking the boilie and pulling the hair through the cork stick and unhooking without the boilie deforming.

### Background of the invention

In angling, and particularly in carp fishing, much use is made of so called boilies and pellets as bait. A boilie consists of a quantity of dough which has been kneaded manually or mechanically, formed into a desired shape and then boiled. The boiling results in a desired hardened outer layer. The hardened outer layer makes it possible to fish more selectively for groundfish such as carp because the hardened outer layer makes the bait less attractive to whitefish. Commercially available boilies are usually spherical in shape, with diameters in a range from 10 to 30 mm. Such boilies are usually supplied in packagings of one sorted size.

When angling with boilies a boilie is attached under the hook with a so-called hair. The outer end of the hair is provided for this purpose with a loop. By means of a hooked needle, the so-called boilie needle, the loop of the hair is pulled through the boilie and, optionally using a so-called stopper, secured to the boilie.

In the case of pellets the dough is pressed into the shape of a cylinder. Pellets can also be supplied in a range of dimensions. Usual sizes are (0 x h) 16 x 15 mm and 17 x 18 mm. Pellets are attached under the hook in the same manner as boilies by means of a hair.

When fishing for groundfish such as carp a distinction is made between three ways of presenting the bait: lying on the water bottom, floating in the water above the hook and floating on the water surface. The floating presentation is perceived as being particularly effective when the tip of the hook rests on the bottom. When the fish takes the bait, the hook hooks into the bottom lip where it is thickest so that the mouth cannot be torn open.

The specific weight of the boilie and the pellet is generally greater than that of water. A usual method for reducing the specific weight of the boilie and the pellet is to provide the bait with a rod-like piece of cork, the cork stick. For this purpose a hole is drilled in the bait using a simple hand drill available commercially for this purpose. This hand drill consists of a spiral drill bit with a hand grip. The shank of the drill bit is relatively short. The amount of cork necessary to impart the desired buoyant properties to the boilie or the pellet is determined experimentally by the angler.

The method for providing a boilie or a pellet with a cork stick has a number of drawbacks. Firstly, drilling often results in cracking and ultimately breakage, whereby the bait becomes unusable. Secondly, the arranging of the cork stick in the drilled hole likewise regularly results in cracking and breaking apart. Thirdly, breakage can result in injury and material damage when the drill slips out and makes uncontrolled movements. Fourthly, there is little or no control in said method over the depth of the drilled hole, over the length of the inserted cork stick, and ultimately over the adjustment of the buoyancy of the boilie.

The present invention has for its object to provide a device and a method for arranging a drilled hole in a boilie and placing a stick of material in the drilled hole with the purpose of imparting buoyancy to the boilie or pellet, wherein said drawbacks do not occur, or hardly so.

### Summary of the invention

A device of the above specified type is for this purpose characterized in that the device comprises first and second co-acting substantially block-like parts, wherein the first part comprises a substantially flat upper side with at least one first recess therein for partially closing round the boilie or pellet and wherein the bottom of the first recess is provided with a hole extending to the underside of the first part in order to pull the hair through with the boilie needle. The second part comprises a substantially flat underside with at least one second recess therein for closing round the part of the boilie or pellet not closed around by the recess in the first part, wherein the bottom of the second part is provided with a borehole which extends to the upper side of the second part and which provides access and guiding for the hand drill.

The first and the second part further comprise co-acting positioning means with which the first part and the second part are positioned relative to each other such that the first and the second recess form a space which corresponds to the shape and dimensions of the boilie or pellet and which can close round the boilie. An advantage of said features of the present invention is that the boilie or pellet cannot deform, or hardly so, when a force is exerted thereon via the drilled hole with the hand drill. Tests have shown that the chance of cracking and breaking apart during drilling of a hole in the boilie or pellet is hereby limited to a minimum. The same advantage applies when a rod-like material is arranged in the drilled hole in order to impart buoyancy to the boilie or pellet.

In an advantageous embodiment the device according to the invention comprises a hinge with which the first part is coupled hingedly to the second part, thereby facilitating exact mutual positioning of the two parts.

In an advantageous embodiment the second part is likewise provided with an adjustable stop with which the length of the shaft of the borehole can be continuously varied and whereby the user can vary the depth of the hole drilled in the boilie or pellet, and thereby the buoyancy, in an effective manner. In an advantageous embodiment the shaft of the second part and the stop are provided for this purpose with co-acting screw threads.

The invention also provides a flanged bush with which the internal diameter of the adjustable stop can be reduced. This is advantageous when it is wished to first pre-drill a hard pellet with a drill bit of a small diameter in order to prevent cracking.

For the purpose of closing round spherical boilies the device is embodied with recesses which together envelop a spherical space. In a second exemplary embodiment the device is embodied with recesses which envelop an upright cylindrical space. This embodiment is suitable for arranging a drilled hole in pellets.

In a further advantageous embodiment the first and the second part are provided with co-acting locking means with which both parts are locked in a position determined by the positioning means.

In order to be able to serve for the arrangement of drilled holes in boilies and pellets of differing sizes and shapes the invention provides an embodiment wherein the first part and the second part are provided with a plurality of mutually co-acting recesses and boreholes corresponding thereto for the purpose of providing access and guiding for the hand drill.

The method for arranging a drilled hole in a boilie or a pellet and arranging a stick of material in the drilled hole according to the invention provides a number of steps for:
- selecting a device according to the present invention, the dimensions of the recesses of which correspond to the dimensions of the boilie or the pellet;
- placing the boilie or the pellet in the first recess of the first part;
- positioning the second part on the first part by making use of the positioning means, wherein the chamber formed by the respective recesses closes round the boilie or the pellet;
- locking the first part to the second part by means of the locking means;
- placing the known hand drill in the borehole and drilling a drilled hole in the boilie or the pellet to a depth at which the stop of the hand drill comes up against the adjustable stop;
- arranging the stick of material via the borehole into the hole drilled in the boilie or the pellet;
- releasing the locking between the first and the second part;
- placing the boilie needle through the stick of material via the hole in the underside of the first part, hooking on the hair and pulling the hair through the stick of material and through the hole in the first part and then unhooking;
- and taking the boilie or the pellet out of the recess of the first part.

As well as avoiding loss of the boilie or the pellet through cracking and breaking apart, the method according to the invention results in a safe method with which the chance of injury and damage is limited to a minimum. Application of the device further results in a constant depth of the drilled hole, whereby the variation in the buoyancy between thus prepared boilies or pellets will be minimal. This enhances the effectiveness of fishing with boilies and pellets.

### Brief description of the drawings

The invention is elucidated hereinbelow with reference to three figures. Figure 1 shows schematically a perspective view of a device according to the present invention. Figure 2 shows schematically a known hand drill. Figure 3 shows a schematic cross-section of a device according to the invention.

### Exemplary embodiment of a device and a method according to the invention

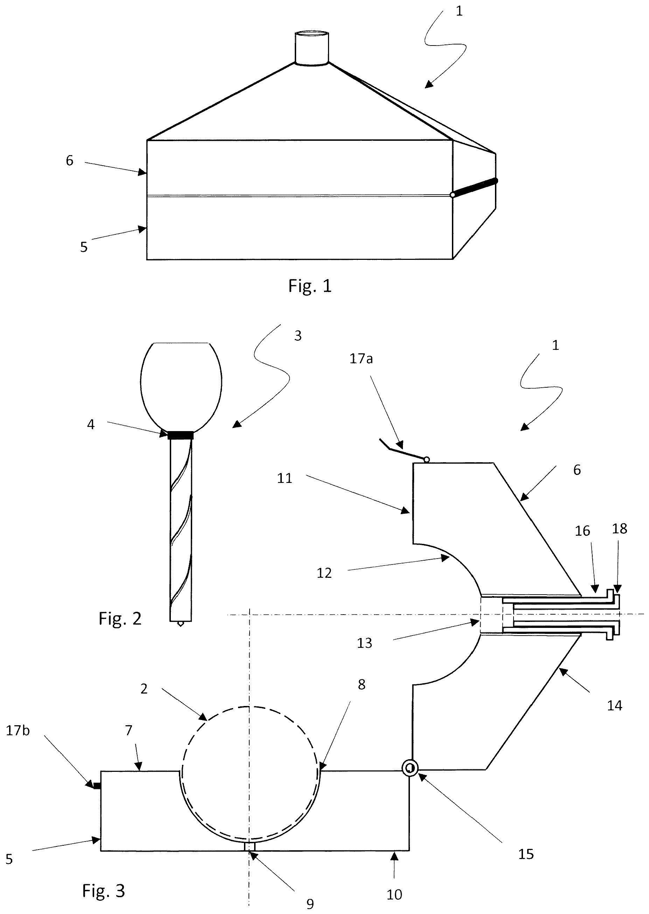

The invention will be further elucidated by way of example below on the basis of one exemplary embodiment shown in a drawing. Figure 1 shows schematically a device 1 according,to the invention which consists of an assembly of two parts 5,6 in a closed position. Figure 3 shows a cross-section of the same device 1 in opened position. The substantially flat upper side 7 of first part 5 is provided with a recess 8 for partially closing round a boilie 2. The substantially flat underside 11 of second part 6 is provided with a second recess 12 co-acting with first recess 8. The two recesses 8,12 according to the present exemplary embodiment together close round a spherical space. According to an exemplary embodiment not shown here, the two recesses 8,12 close round an upright cylindrical space.

The invention provides embodiments with recesses of different dimensions corresponding to boilies of different dimensions. Devices with respective recesses with a diameter of 15 and 20 mm are for instance suitable for boilies with a respective diameter of 15 and 20 mm.

According to the invention both parts of device 1 are provided with positioning means 15 which ensure that both co-acting recesses 8,12 are exactly positioned relative to each other in closed position. The exemplary embodiment shown here is provided for this purpose with a hinge to which the two parts 5,6 are coupled. The invention also provides for alternative positioning means, for instance one with which second part 6 can be screwed onto first part 5.

Second part 6 is provided with a through-borehole 13 so as to provide the known hand drill 3 with access and guiding to the space around which recesses 8,12 close. The device and the known hand drill in principle provide the option of drilling wholly through a boilie 2. It is however advantageous to not drill completely through boilie 2. This arouses less suspicion in the carp and drilling all the way through brings an additional risk of cracking and breaking apart. A blind drilled hole further determines the amount of rod-like material which can be arranged in order to impart buoyancy to boilie 2. Through the use of an adjustable stop 16, which co-acts with stop 4 of hand drill 3, device 1 provides the angler with the option of providing the boilies 2 prepared by him/her with a uniform buoyancy.

The invention provides devices 1 with a stop 16 with different internal diameters corresponding to the diameter of commercially available hand drills 3. In order to reduce the internal diameter of stop 16 the invention provides a flanged bush 18. The invention also provides an embodiment wherein a flanged bush of the same type is arranged in borehole 13. Flanged bush 18 is particularly intended for the purpose of drilling a hole in a hard pellet in order to prevent breaking apart and in order to drill straight.

The exemplary embodiment shown in figure 3 is provided with locking means 17a,b for locking the first and second part 5,6 in a closed position. Device 1 according to the invention can however also be used without these locking means 17a,b. Parts 5,6 are in that case pressed together manually.

In order to avoid cracking and breaking apart during insertion of a stick of material with a relatively high buoyancy, for instance in the form of cork, it is convenient to arrange the stick when boilie 2 is located in the device in the closed position as according to figure 1. The stick is then pressed into the boilie via the drilled hole in stop 16 using drill 3.

In order to attach boilie 2 to a hair while making use of a boilie needle, it is convenient to keep boilie 2 in device 1. Recess 8 of first part 5 is provided with a hole 9 extending to the underside 10 of first part 5 so that the hooked needle can be pushed through the cork stick in boilie 2. The device 1 is then opened, the loop of the hair is hooked to the hooked needle and subsequently pulled through the cork stick and through hole 9. The loop is then unhooked from the hooked needle and boilie 2 can be removed on the hair from device 1. The use of the hooked needle while boilie 2 is held in device 1 prevents boilie 2 breaking apart during arranging of the hair.

The exemplary embodiment shown in figures 1-3 provides space for one boilie 2. The invention also provides similar devices which provide space for more than one boilie, for instance for boilies of different dimensions, or which provide space for boilies and pellets simultaneously.

The invention is elucidated on the basis of exemplary embodiments which relate to a spherical and cylindrical bait of different dimensions. The invention likewise relates to bait of other shape, for instance a cube shape.

## Claims

1. Device (1) for arranging a drilled hole in a boilie or pellet (2) with a known hand drill (3) with a stop (4), and arranging a known stick of material in the drilled hole, **characterized in that** the device comprises first and second co-acting substantially block-like parts (5,6), wherein:
- the first part (5) comprises a substantially flat upper side (7) with at least one first recess (8) therein for partially holding the boilie or pellet (2) and wherein the bottom of the first recess (8) is provided with a hole (9) extending to the underside (10) of the first part (5);
- the second part (6) comprises a substantially flat underside (11) with at least one second recess (12) therein for holding the part of the boilie or pellet (2) which is not held by the recess (8) in the first part (5), wherein the bottom of the second part is provided with a borehole (13) which extends to the upper side (14) of the second part (6) and which provides access and guiding for the hand drill (3);
- the first and the second part (5,6) comprise co-acting positioning means (15) with which the first part (5) and the second part (6) are positioned relative to each other such that the first and the second recess (8,12) form a space which corresponds to the shape and dimensions of the boilie or pellet (2) and which can close round the boilie or pellet (2).

2. Device (1) as claimed in claim 1, **characterized in that** the positioning means (15) comprise a hinge with which the first part (5) is coupled hingedly to the second part (6).

3. Device (1) as claimed in claim 1, **characterized in that** the second part comprises an adjustable stop (16) with which the length of the shaft of the borehole (13) can be continuously varied.

4. Device (1) as claimed in claim 3, **characterized in that** the adjustable stop (16) is provided with an external screw thread which co-acts with an internal screw thread with which the shaft of the borehole (13) is provided.

5. Device (1) as claimed in claims 1, 3 and 4, **characterized in that** the adjustable stop (16) is provided with a flanged bush (18) for reducing the diameter of the shaft.

6. Device (1) as claimed in claim 1, **characterized in that** the first and second recesses (8,12) together envelop a spherical space.

7. Device (1) as claimed in claim 1, **characterized in that** the first and second recesses (8,12) together envelop a cylindrical space.

8. Device (1) as claimed in claim 1, **characterized in that** the first and the second part (5,6) comprise co-acting locking means (17a,b) with which both parts (5,6) are locked in a position determined by the positioning means (15).

9. Device (1) as claimed in claim 1, **characterized in that** the first part (5) and the second part (6) comprise a plurality of mutually co-acting respective recesses (8,12) and boreholes (13) corresponding thereto.

10. Method for arranging a drilled hole in a boilie or a pellet (2) and arranging a known stick of material in the drilled hole, **characterized in that** the method comprises of:
- selecting a device (1), the dimensions of the recesses (8,12) of which correspond to the dimensions of the boilie or the pellet (2);
- placing the boilie or the pellet (2) in the first recess (8) of the first part (5);
- positioning the second part (6) on the first part (5) by making use of the positioning means (15), wherein the space formed by the respective recesses (8,12) closes round the boilie or pellet (2);
- locking the first part (5) to the second part (6) by means of the locking means (17a,b);
- placing the hand drill (3) in the borehole (13) and drilling a drilled hole in the boilie or pellet (2) to a depth at which the stop (4) of the hand drill (3) comes up against the adjustable stop (16);
- arranging the stick of material via the borehole (13) into the hole drilled in the boilie or the pellet (2);
- releasing the locking between the first and the second part (5,6);
- placing the boilie needle through the stick of material via the hole (9) in the underside of the first part (5);
- hooking the loop of the hair onto the boilie needle;
- pulling the hair through the rod-like material using the boilie needle through the hole (9) in the underside of the first part (5);
- unhooking the boilie needle and taking the boilie or pellet (2) out of the first recess (8).
